# EUROPEAN PATENT SPECIFICATION

(11) **EP 1 282 321 B1**
(45) Date of publication and mention of the grant of the patent: **09.02.2005**
(21) Application number: 02016495.0
(22) Date of filing: 23.07.2002
(51) Int. Cl.: H04Q 7/24, H04Q 7/38

(54) **System and method for load sharing within a core network**
System und Verfahren zur Lastverteilung in einem Kernnetz
Système et procédé pour la répartition de charge dans un réseau central

(30) Priority: 02.08.2001 US 309982; 18.04.2002 US 127055
(43) Date of publication of application: 05.02.2003
(73) Proprietor: Telefonaktiebolaget LM Ericsson (publ), 164 83 Stockholm (SE)
(72) Inventor: Edlund, Peter Hans, 147 33 Tumba (SE); Maguire, Patrick, Ballinamore, County Leitrim (IE)
(74) Representative: Mohsler, Gabriele

(56) References cited:
- WO-A-99/46905
- US-A- 6 091 953
- NORTEL NETWORKS: "Draft Technical Report: Turbo Charger" TSG-RAN WORKING GROUP 3 MEETING, WARWICK ENGLAND, 4 June 1999 (1999-06-04), pages 1-12, XP002216265

## Description

### TECHNICAL FIELD

The present invention relates to load sharing within a core network, and more particularly, to a system and method for providing a load reporting function within pooled network resources of a core network.

### BACKGROUND OF THE INVENTION

The requirement to have a radio network controller (RNC) or base station controller (BSC) controlled by a single mobile switching center (MSC) server or Serving GPRS Support Node (SGSN) (network resources) leads to certain limitations. Allowing BSCs and RNCs to connect to a number of MSC servers or SGSNs increases the networks performance in terms of scalability, by distributing the network load amongst the serving entities, and reducing the required signaling as a user roams. Current standardization work within 3GPP proposes a solution wherein one or more RNCs or BSCs can be connected to one or more MSCs or SGSNs. However, to date there has been no solution for providing load sharing amongst the pooled network resources.

The purpose of connecting RNC/BSC nodes to multiple MSC/SGSN nodes is to increase serviceability, reduce signaling traffic in the core network, achieve load balancing within certain core network areas and support easier core network capacity expansion. Within a pool-area, a number of MSC/SGSN nodes are grouped together. Any MSC/SGSN node in such a pool area may provide service to a user entity (UE) in the pool area. The pool area concept provides a mobile station within the radio coverage of the pool area the potential to be handled by one MSC/SGSN for the whole pool area. Therefore, the core network nodes have to share responsibility for all location areas (LAs) and routing areas (RAs) of the pool-area. Thus, every network resource can handle mobile stations in all location areas and routing areas of the pool area. This leads to a significant reduction of signaling traffic within the core network since external location updates, SGSN relocation and inter-MSC hand-over procedures become obsolete to a large extent.

The mechanism for keeping a mobile station associated with one dedicated core network node is the provisioning of a network resource identifier (NRI). The NRI is provided to an RNC via the mobile station with each new mobile station core network signaling connection establishment. Connecting a Radio Access Network (RAN) to multiple core network nodes requires a Non Access Stratum (NAS) node selection function within the RNC nodes. This function is used to assign specific network resources to serve the mobile station and subsequently route the control plane traffic to the associated network resource. The routing function entity in the RNC analyses the access stratum part of the RRC-Initial-direct-transfer message from a mobile station. Based upon the information in the intra domain NAS node selector (IDNNS), and the core network domain indicator, the routing decision in the RNC is made. The information in the IDNNS is provided by the NAS entity to the mobile station.

The RNC routes initial NAS signaling messages according to the NRI and the "domain indicator" (CS(circuit switched) or PS(packet switched)) to the relevant core network node if a core network node address is configured in the RNC for the specified NRI and the requested domain. If no core network node address is configured in the RNC for the requested NRI and domain, the RNC routes the initial NAS signaling message to a core network node selected from the available core network nodes which serve the domain.

One of the objectives of the pooled area is to achieve load distribution among available network resources in the pool while simultaneously reducing signals as mobile stations roam about a pool area. However, the NAS node selection function in the RAN has no data on the current load within each network resource within the pool to which the NAS node selection function must assign a mobile station.

WO-A-9946905 refers to a method of controlling a load distribution in a packet data node in a cellular communication system supporting packet data communication.

### SUMMARY OF THE INVENTION

The present invention overcomes the foregoing and other problems with a system and method for load sharing among the plurality of pooled network resources. Each of the plurality of pooled network resources include a load reporting function for storing load data received from the other members of the plurality of pooled network resources. The load reporting function also distributes load data from the network resource to the remaining plurality of pooled network resources. The load data is transmitted and received via an interface of the network resource.

### BRIEF DESCRIPTION OF THE DRAWINGS

A more complete understanding of the method and apparatus of the present invention may be obtained by reference to the following Detailed Description when taken in conjunction with the accompanying Drawings wherein:
FIGURE 1 illustrates the structure of a core network with pool areas;
FIGURE 2 illustrates implementation of the load reporting function within a MSC pool;
FIGURE 3 illustrates implementation of the load reporting function within a SGSN pool;
FIGURE 4 illustrates load information transmitted over network resource, interfaces;
FIGURE 5 illustrates an interface between a load reporting function and a mobile management entity;
FIGURE 6 is a flow diagram illustrating the distribution of load information;
FIGURE 7 is a flow diagram illustrating an alternative method for distributing load information.
FIGURE 8 illustrates an availability table for network resources; and
FIGURE 9 is a flow diagram illustrating the assignment of a mobile station to a network resource.

### DETAILED DESCRIPTION

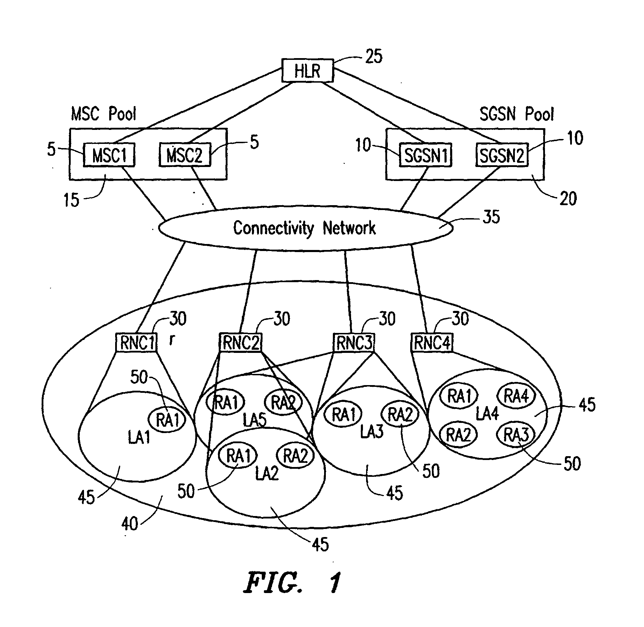

Referring now to the drawings, and more particularly to FIGURE 1, there is illustrated the structure of a core network containing pool areas in which the system and method of the present invention are implemented. While the following description with respect to FIGURE 1 is illustrative of one embodiment in which the system and method of the present invention may be implemented, it should be realized that various other implementations may be used in different or similar systems.

Network resources such as MSCs 5 and SGSNs 10 are grouped together within an MSC pool 15 and SGSN pool 20, respectively. These resources are able to obtain information about mobile stations assigned to these network resources by accessing a home location registration (HLR) 25 associated with a mobile station. The MSCs 5 and SGSNs 10 are able to access radio network controllers (RNCs) 30 via the connectivity network 35. The radio network controllers 30 assign mobile stations to any MSC 5 within the MSC pool 15 or to any SGSN 10 within the SGSN pool 20 through the connectivity network 35. By enabling the radio network controllers 30 to have access to any of the MSCs 5 and SGSNs 10 within their respective pools, the radio network controllers 30 are able to pool their resources such that a mobile station roaming in a pool area 40 can be served by a single MSC 5 or SGSN 10. The pool area 40 consists of a number of location areas 45 associated with each of the radio network controllers 30. Each location area 45 also include various routing areas 50 located therein. Within this system, each MSC 5 or SGSN 10 would be able to share responsibility for all location areas 45 and routing areas 50 of the entire pool area 40.

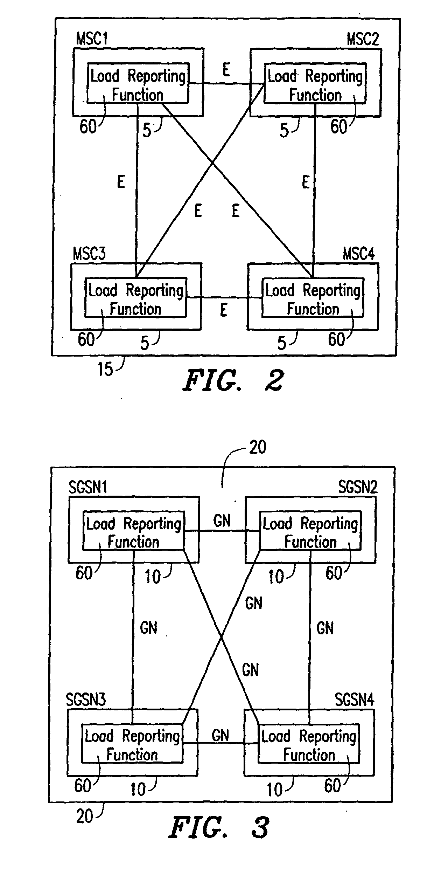

Referring now to FIGURES 2 and 3, there are illustrated implementations of a load reporting function 60 residing within each network resource, i.e., MSC 5 and SGSN 10, of the core network. The load reporting function 60 will store information relating to the current load supported by an associated network resource. The load reporting function 60 has the ability to report this information using existing MAP procedures to all other MSCs and SGSNs within the network resource pools. This information will be transmitted as additional backbone signaling over the E interface within the MSC pool 15 and over the GN interface within the SGSN pool 20. The initiation of distribution of the load information stored by the load reporting function 60 can either be trigger based, for example, the server load has decreased/increased by X% within T seconds, or may be periodically distributed. Either of these initiation functionalities may be configured by the user.

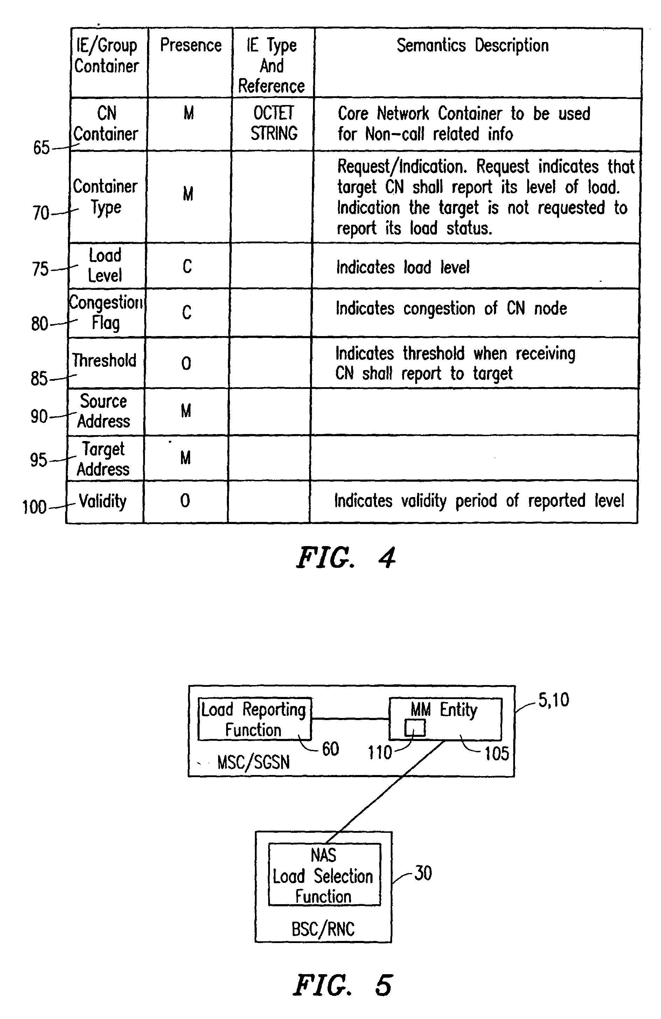

The load information for a particular network resource shall be passed over the E or GN interfaces respectively within a message as illustrated in FIGURE 4, and includes the following information. The CN container 65 is a core network container used to store non-call related information. The container type 70 is a request/indication identifier. A request indicates that a target core network shall report its level of load. An indication indicates that the target core network is not requested to report its load status. The load level 75 indicates the load level of the associated MSC or SGSN. A congestion flag 80 provides an indication of the existence of congestion within a particular core network node. The threshold level 85 may be set to a predetermined level to indicate the threshold when a node shall report its load level. The source address 90 indicates the location from which the information is being transmitted and the target address 95 indicates the address to which the information is being sent. The validity indicator 100 indicates the validity period of the reported load level.

Referring now also to FIGURE 5, the load reporting function 60 also interfaces with a mobility management entity (MME) 105 responsive to either a periodic timer or reaching of a selected load threshold. As mentioned previously, these factors are each configurable. Upon interfacing with the mobility management entity, the network resources will set a report NR load flag 110 within the mobility management entity 105. The report NR load flag causes each of the network resources (MSCs 5 and SGSNs 10) to download their load data as indicated in FIGURE 4 to the various radio network controllers 30 within the core network.

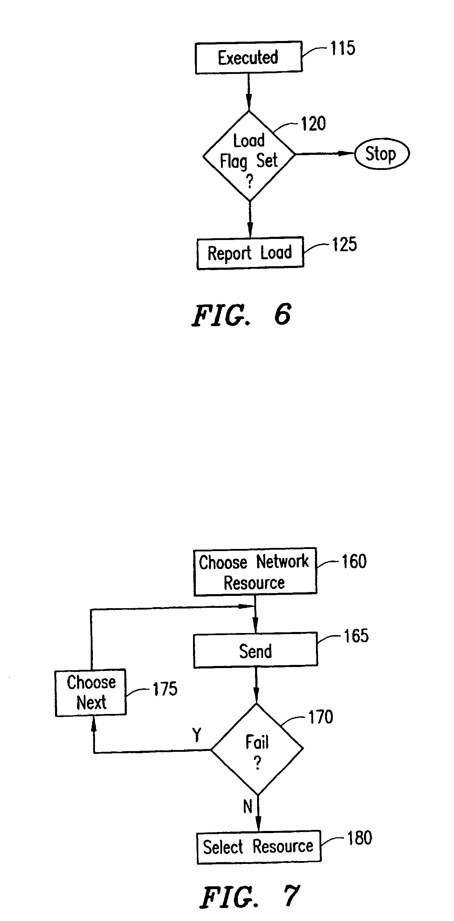

Referring now also to FIGURE 6, each time a paging/RAU/LAU mobility management procedure is executed at step 115, the mobility management entity within the network resource determines if its report NR load flag 105 is set at step 120. If the report NR load flag 105 is set, the mobility management entity reports at step 125 the present server load of the currently accessed network resource if the process is load triggered or the present server load of one or more of the network resources in the pool if the process is triggered by a periodic timer. The information reported to the RNCs 30 may also contain load statistics for network resources from other pools in the case of overlapping pools. The information downloaded may also contain load statistics for network resources from other pools in the case of overlapping pools.

In an alternative embodiment, a new procedure could be implemented within the mobility management entity 105 wherein network resource load information is downloaded from all pooled network resources to associated RANs. This process requires a new signal to be broadcast from each network resource to all RNCs within a pool. The information downloaded may also contain load statistics for network resources from other pools in the case of overlapping pools.

In a further embodiment (FIGURE 7), a new procedure may be implemented wherein a RNC 30 repeats location update request (LAR) to another network resource. For this solution, no backbone signaling between network resources 30 in a pool is required. An RNC chooses at step 160 a first network resource from a pool and sends at step 165 a LAR to the network resource 30. If the request fails due to the present load of the chosen network resource at inquiry step 170, the RNC is informed and subsequently it chooses another network resource to direct the location access request at step 175. Otherwise a network resource is selected at step 180.

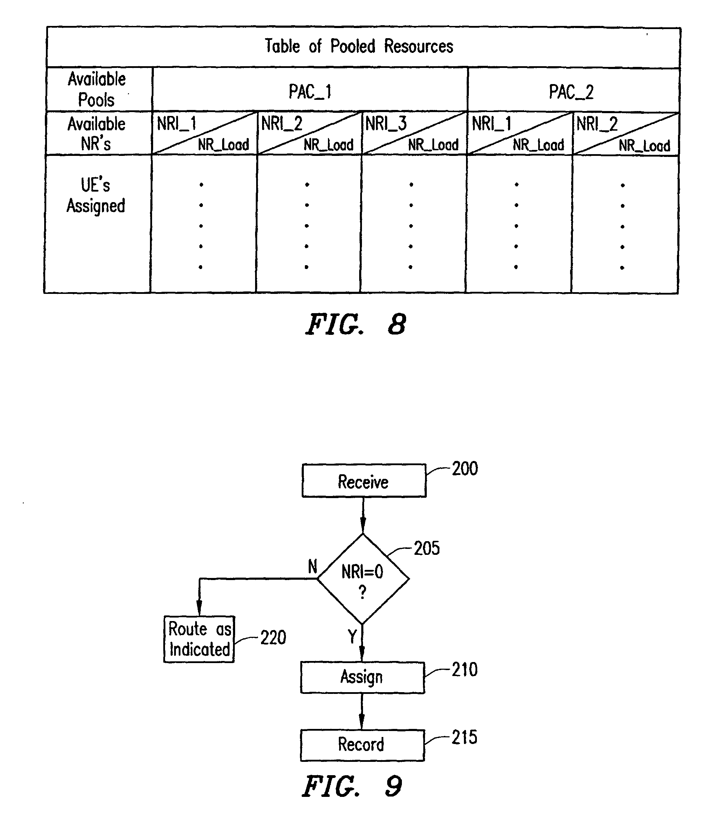

Referring now to FIGURE 8, there is illustrated a table of pooled resources containing information on the availability of particular network resource. This information would be stored within a NAS node selection function. The network resource load is stored within the table and is expressed as a percentage of maximum load of the network resource. Additionally, the table of pooled resources contains information on the available pools, the network resources available within each pool and the network resource identifier associated with the network resource. Furthermore, a listing of the UEs assigned to a particular network resource is provided. Referring now to FIGURE 9, using this information, the BSC/RNC 30 upon receipt of a RRC Initial Direct Transfer/MM related RR request from a mobile station at step 200, the RNC 30 analyses at step 205 the IDNNS of the mobile station. If the network resource indicator for the mobile station equals zero, the mobile station is assigned to the network resource with the smallest load from one of the provided pools at step 210. The assigned routing data is recorded at step 215 in the NAS node selection function. If the NRI does not equal zero, the information is routed at step 220 according to the existing data within the NAS node selection function. In this way, the NAS node selection function may optimize the pool performance by directing subsequent initial mobile station uplink accesses to the network resource reporting the smallest load. This load information is downloaded from the core network to the RAN in a table having the structure as indicated in FIGURE 8. This solution is applicable to A, GB and IU interfaces to pooled network resources and has minimal impact upon signaling within the core network.

The previous description is of a preferred embodiment for implementing the invention, and the scope of the invention should not necessarily be limited by this description. The scope of the present invention is instead defined by the following claims.

## Claims

1. A method for load sharing among network resources, comprising the steps of:
- storing load data at each of a plurality of pooled network resources within a core network,
- distributing the load data from at least one network resource of the plurality of pooled network resources to other network resources of the plurality of pooled network resources (60)
**characterized by** the steps of:
- downloading the load data from at least one of the plurality of pooled network resources to at least one radio network controller (30) that is adapted to assign a mobile station to one of the pooled network resources,
wherein the network resource is a mobile switching center (5) or a serving GPRS support node (10)
wherein the plurality of pooled network resources is a plurality of network resources grouped together in a pool for providing services to mobile stations within a coverage area of the pool, (15, 20) and
wherein the stored load data comprises load data received from at least one other member of the plurality of pooled network resources.

2. The method according to claim 1, wherein the downloaded load data comprises a present server load of the at least one of the plurality of pooled network resources that is downloading the load data.

3. The method according to claim 1 or 2, wherein the downloaded load data comprises load statistics for network resources from other pools.

4. The method according to claim 1, 2 or 3, further including the step of assigning a mobile station to one of the pooled network resources responsive to the load data in the radio network controller.

5. The method according to any of the preceding claims, wherein the step of downloading further comprises the steps of:
detecting an execution of at least one of a paging procedure, an RAU procedure, or an LAU procedure;
determining whether a load flag (110) is set at a mobility management entity responsive to a detection; and
downloading the load data if the load flag is set.

6. The method according to any of the preceding claims, wherein the step of distributing is responsive to an expiration of a selected time period.

7. The method according to any of the preceding claims, wherein the step of distributing is responsive to attaining a selected load level at the at least one network resource.

8. A network resource, comprising a load reporting means adapted to
- store load data of associated pooled network resources,
- distribute the load data to other network resources of a plurality of pooled network resources, (60)
- download the load data to at least one radio network controller (30) that is adapted to assign a mobile station to one of the pooled network resources,
wherein the network resource is a mobile switching center (5) or a serving GPRS support node (10), and
wherein the plurality of pooled network resources is a plurality of network resources grouped together in a pool for providing services to mobile stations within a coverage area of the pool (15, 20)
and wherein the stored load data comprises load data received from at least one other member of the plurality poded network resources.

9. The network resource of claim 8, wherein the load reporting means is further adapted to
- detect an execution of at least one of a paging procedure, an RAU procedure, or an LAU procedure;
- determine whether a load flag (110) is set at a mobility management entity responsive to a detection; and
- download the load data if the load flag is set.

10. The network resource of claim 9, further comprising the mobility management entity (105).

11. The network resource of claim 8, 9 or 10 wherein the load reporting means is further adapted to distribute the load data responsive to an expiration of a selected time period.

12. The network resource of one of the claims 8 to 11, wherein the load reporting means is adapted to distribute the load data responsive to attaining a selected load level at the network resource.

13. A network comprising;
a plurality of network resources according to one of the claims 8 to 12 grouped in a pool, and
a plurality radio network controllers (30) connected to any of the plurality of pooled network resources, said plurality of radio network controllers controlling coverage of a pooled radio coverage area.

14. The network of claim 13, wherein the plurality of radio network controllers are further configured to assign mobile station to a network resource responsive to the load data in the radio network controller.

15. The network of Claim 13 or 14, wherein plurality of radio network controllers are further configured to assign the mobile station to a network resource having a smallest load as indicated by the load data.

## Patentansprüche

1. Verfahren zur Lastverteilung unter Netzressourcen, umfassend die Schritte:
- Speichern von Lastdaten in jedem einer Vielzahl von Poolnetzressourcen innerhalb eines Kernnetzes,
- Verteilen der Lastdaten aus mindestens einer Netzressource aus der Vielzahl von Poolnetzressourcen an andere Netzressourcen aus der Vielzahl von Poolnetzressourcen (60),
**gekennzeichnet durch** die Schritte:
- Herunterladen der Lastdaten aus mindestens einer der Vielzahl von Poolnetzressourcen in mindestens ein Funknetzsteuergerät (30), das zum Zuordnen einer Mobilstation zu einer der Poolnetzressourcen angepaßt ist,
wobei die Netzressource eine Mobilfunkvermittlungsstelle (5) oder ein bedienender GPRS-Supportknoten (10) ist,
wobei die Vielzahl von Poolnetzressourcen eine Vielzahl von in einem Pool zusammengruppierten Netzressourcen ist, zur Bereitstellung von Diensten an Mobilstationen innerhalb eines Abdeckungsbereiches des Pools (15, 20), und
wobei die gespeicherten Lastdaten von mindestens einem anderen Mitglied aus der Vielzahl von Poolnetzressourcen empfangene Lastdaten umfassen.

2. Verfahren nach Anspruch 1, wobei die heruntergeladenen Lastdaten eine präsente Serverlast aus der mindestens einen der Vielzahl von Poolnetzressourcen, die die Lastdaten herunterlädt, umfaßt.

3. Verfahren nach Anspruch 1 oder 2, wobei die heruntergeladenen Lastdaten Laststatistiken für Netzressourcen aus anderen Pools umfassen.

4. Verfahren nach Anspruch 1, 2 oder 3, weiterhin umfassend den Schritt des Zuordnens einer Mobilstation zu einer der Poolnetzressourcen als Antwort auf die Lastdaten im Funknetzsteuergerät.

5. Verfahren nach einem der vorstehenden Ansprüche, wobei der Schritt des Herunterladens weiterhin die Schritte umfaßt:
Erkennen einer Ausführung von mindestens einer einer Paging-Prozedur, einer RAU-Prozedur oder einer LAU-Prozedur;
Bestimmen, ob ein Lastflag (110) in einer Mobilitätsverwaltungseinrichtung als Antwort auf eine Erkennung gesetzt ist, und
Herunterladen der Lastdaten, wenn das Lastflag gesetzt ist.

6. Verfahren nach einem der vorstehenden Ansprüche, wobei der Schritt des Verteilens eine Reaktion auf den Ablauf eines ausgewählten Zeitraums ist.

7. Verfahren nach einem der vorstehenden Ansprüche, wobei der Schritt des Verteilens eine Reaktion auf das Erreichen eines ausgewählten Lastpegels in der mindestens einen Netzressource ist.

8. Netzressource, umfassend ein Lastberichtsmittel, das angepaßt ist zum
- Speichern von Lastdaten zugeordneter Poolnetzressourcen,
- Verteilen der Lastdaten an andere Netzressourcen aus einer Vielzahl von Poolnetzressourcen (60),
- Herunterladen der Lastdaten in mindestens ein Funknetzsteuergerät (30), das zum Zuordnen einer Mobilstation zu einer der Poolnetzressourcen angepaßt ist,
wobei die Netzressource eine Mobilfunkvermittlungsstelle (5) oder ein bedienender GPRS-Supportknoten (10) ist, und
wobei die Vielzahl von Poolnetzressourcen eine Vielzahl von in einem Pool zusammengruppierten Netzressourcen ist, zur Bereitstellung von Diensten an Mobilstationen innerhalb eines Abdeckungsbereiches des Pools (15,20), und
wobei die gespeicherten Lastdaten von mindestens einem anderen Mitglied aus der Vielzahl von Poolnetzressourcen empfangene Lastdaten umfassen.

9. Netzressource nach Anspruch 8, wobei das Lastberichtsmittel weiterhin angepaßt ist zum
- Erkennen einer Ausführung von mindestens einer einer Paging-Prozedur, einer RAU-Prozedur oder einer LAU-Prozedur;
- Bestimmen, ob ein Lastflag (110) in einer Mobilitätsverwaltungseinrichtung als Reaktion auf eine Erkennung gesetzt ist, und
- Herunterladen der Lastdaten, wenn das Lastflag gesetzt ist.

10. Netzressource nach Anspruch 9, weiterhin umfassend die Mobilitätsverwaltungseinrichtung (105).

11. Netzressource nach den Ansprüchen 8, 9 oder 10, wobei das Lastberichtsmittel weiterhin angepaßt ist, um die Lastdaten als Reaktion auf den Ablauf eines ausgewählten Zeitraums zu verteilen.

12. Netzressource nach einem der Ansprüche 8 bis 11, wobei das Lastberichtsmittel angepaßt ist, um die Lastdaten als Reaktion auf das Erreichen eines ausgewählten Lastpegels in der Netzressource zu verteilen.

13. Netz, umfassend
eine Vielzahl von Netzressourcen gemäß einem der Ansprüche 8 bis 12, die in einem Pool gruppiert sind, und
eine Vielzahl von Funknetzsteuergeräten (30), die mit einer aus der Vielzahl von Poolnetzressourcen verbunden sind, wobei die Vielzahl von Funknetzsteuergeräten die Abdeckung eines Poolfunkabdeckungsbereiches steuert.

14. Netz nach Anspruch 13, wobei die Vielzahl von Funknetzsteuergeräten weiterhin konfiguriert ist, um einer Netzressource eine Mobilstation als Reaktion auf die Lastdaten im Funknetzsteuergerät zuzuordnen.

15. Netz nach Anspruch 13 oder 14, wobei die Vielzahl von Funknetzsteuergeräten weiterhin konfiguriert ist, um die Mobilstation einer Netzressource zuzuordnen, welche entsprechend der Angaben durch die Lastdaten die kleinste Last hat.

## Revendications

1. Méthode pour répartir la charge de traitement entre des ressources du réseau, comprenant les étapes consistant à :
- stocker les données de charge au niveau de chacune parmi une pluralité de ressources de réseau mises en commun à l'intérieur d'un réseau central,
- distribuer les données de charge à partir d'au moins une ressource du réseau parmi la pluralité de ressources du réseau mises en commun à d'autres ressources du réseau parmi la pluralité de ressources (60) du réseau mises en commun,
**caractérisée par** les étapes consistant à :
- télécharger les données de charge à partir d'au moins l'une parmi la pluralité de ressources du réseau mises en commun vers au moins un contrôleur de réseau radio (30) qui est adapté pour attribuer une station mobile à l'une des ressources du réseau mises en commun,
méthode dans laquelle la ressource du réseau est un centre de commutation mobile (30) ou un noeud de support de desserte GPRS (5),
dans laquelle la pluralité de ressources du réseau mises en commun est une pluralité de ressources du réseau regroupées en un groupe pour fournir des services à des stations mobiles à l'intérieur d'une zone de couverture du groupe (15, 20), et
dans laquelle les données de charge stockées comprennent des données de charge reçues à partir d'au moins un autre membre de la pluralité de ressources du réseau mises en commun.

2. Méthode selon la revendication 1, dans laquelle les données de charge téléchargées comprennent une charge présente du serveur d'au moins l'une parmi la pluralité de ressources du réseau mises en commun qui télécharge les données de charge.

3. Méthode selon la revendication 1 ou 2, dans laquelle les données de charge téléchargées comprennent des statistiques de charge pour des ressource du réseau à partir d'autres groupes.

4. Méthode selon la revendication 1, 2 ou 3, comprenant en outre l'étape consistant à attribuer une station mobile à l'une des ressources du réseau mises en commun réagissant aux données de charge dans le contrôleur de réseau radio.

5. Méthode selon l'une des revendications qui précèdent, dans laquelle l'étape de téléchargement comprend encore :
- la détection d'une exécution d'au moins l'une des procédures de numérotation, une procédure RAU, ou d'une procédure LAU,
- déterminer si un drapeau de charge (11) est posé au niveau d'une entité de gestion de mobilité réagissant à une détection ; et
- le téléchargement des données de charge si le drapeau de charge est posé.

6. Méthode selon l'une des revendications qui précèdent, dans laquelle l'étape de distribution est la réponse à l'expiration d'un temps prédéterminé.

7. Méthode selon l'une des revendications qui précèdent, dans laquelle l'étape de distribution est la réponse à l'atteinte d'un niveau de charge sélectionné au niveau de la ressource du réseau, au moins une.

8. Ressource de réseau, comprenant un moyen de reportage de charge adapté à :
- stocker des données de charge de ressources du réseau mises en commun associées ;
- distribuer les données de charge à d'autres ressources du réseau parmi une pluralité de ressources (60) du réseau mises en commun,
- télécharger les données de charge à au moins un contrôleur de réseau radio (30) qui est adapté à attribuer une station mobile à l'une des ressources du réseau mises en commun,
dans laquelle la ressource du réseau est un centre de commutation mobile (5) ou un noeud de support de dessert GPRS (10), et
dans laquelle la pluralité de ressources du réseau mises en commun est une pluralité de ressources du réseau regroupées en un groupe pour fournir des services à des stations mobiles à l'intérieur d'une zone de couverture du groupe, et dans laquelle les données de charge stockées sont des données de charge reçues à partir d'au moins un autre membres de la pluralité de ressources du réseau mises en commun.

9. Ressource de réseau selon la revendication 8, dans laquelle le moyen de reportage de charge est adapté en outre à :
- détecter une exécution d'au moins une procédure de numérotation, une procédure RAU ou une procédure LAU,
- déterminer si un drapeau de charge (110) est posé au niveau d'une entité de gestion de mobilité réagissant à une détection ; et
- télécharger les données de charge si le drapeau de charge est posé.

10. Ressource de réseau selon la revendication 9, comprenant en outre l'entité de gestion de mobilité.

11. Ressource de réseau selon la revendication 8, 9 ou 10, dans laquelle le moyen de reportage de charge est adapté, en outre, à distribuer les données de charge en réaction à l'expiration d'un temps sélectionné.

12. Ressource de réseau selon l'une des revendications 8 à 11, dans laquelle le moyen de reportage de charge est adapté pour distribuer les données de charge en réaction à l'atteinte d'un niveau de charge sélectionné au niveau de la ressource du réseau.

13. Réseau, comprenant :
une pluralité de ressources de réseau selon l'une des revendications 8 à 12, regroupées en un groupe, et
une pluralité de contrôleurs de réseau radio (30) connectés à l'une de la pluralité de ressources du réseau mises en commun, ladite pluralité de contrôleurs de réseau radio contrôlant la couverture d'une zone de couverture radio mise en commun.

14. Réseau selon la revendication 13, dans lequel la pluralité de contrôleurs du réseau radio sont configurés, en outre, à attribuer une station mobile à une ressource du réseau réagissant aux données de charge se trouvant dans le contrôleur du réseau radio.

15. Réseau selon la revendication 13 ou 14, dans lequel la pluralité de contrôleurs du réseau radio sont configurés, en outre, pour attribuer une station mobile à une ressource du réseau ayant une charge la plus petite comme indiqué par les données de charge.
